Europäisches Patentamt

(19) European Patent Office

Office européen des brevets

(11) Publication number: **0 208 251**
**B1**

# (12) EUROPEAN PATENT SPECIFICATION

(45) Date of publication of the patent specification:
07.02.90

(51) Int. Cl.⁴: **G01T 1/29**, G01T 1/166,
G01T 1/167

(21) Application number: 86109000.9

(22) Date of filing: 02.07.86

(54) Apparatus and process for measuring gamma radiation from a radioactive waste container.

(30) Priority: 11.07.85 US 754054

(43) Date of publication of application:
14.01.87 Bulletin 87/3

(45) Publication of the grant of the patent:
07.02.90 Bulletin 90/6

(84) Designated Contracting States:
DE FR GB IT SE

(56) References cited:
IEEE NUCLEAR SCIENCE, vol. NS-19, no. 1,
February 1972, pages 211-218, IEEE, New York, US; L.V.
EAST et al.: "Gamma-ray scanning system for barrels
containing plutonium waste"
IEEE NUCLEAR SCIENCE, vol. NS-19, no. 1,
February 1972, pages 820-827, IEEE, New York, US; K.L.
SWINTH et al.: "A versatile gamma scanning system"
NUCLEAR INSTRUMENTS & METHODS ON PHYSICS
RESEARCH, vol. 193, no. 1/2, February 1982,
pages 229-233, North-Holland, Amsterdam, NL; C.E.
MOSS et al.: "A camac gamma-ray scanning system"

(73) Proprietor: WESTINGHOUSE ELECTRIC
CORPORATION, Westinghouse Building Gateway
Center, Pittsburgh Pennsylvania 15222(US)

(72) Inventor: Gross, John Francis, R.D. No. 2, Box 49D, New
Alexandria Pennsylvania 15670(US)

(74) Representative: Stratmann, Ernst, Dr.-Ing.,
Schadowplatz 9, D-4000 Düsseldorf 1(DE)

## Description

This invention relates to the measurement of gamma radiation from radioactive waste and the characterization of the waste by such measurements.

Radioactive waste is generated by a variety of sources such as hospitals, laboratories, military activities, and nuclear power plants. In certain cases these wastes can be packed into 55-gallon drums and shipped to disposal facilities where the drums are processed and then buried in prepared burial sites.

The waste disposal facility generally includes a characterization station that has radiation detectors for verifying that the contents of any containers received conform to the shipping manifest and include only materials authorized for such disposal. The radiation detectors not only measure the quantity of the radiation emanating from the waste in the containers, but also determine the distribution of the radiation energy spectrum of the waste to independently analyze the waste compositions and verify the acceptability of the waste sent for disposal.

Gamma rays are produced in nuclear transformations and consist of photons each with an energy equal to Planck's constant times the frequency associated with the wave nature of the radiation.

The emission of gamma rays is a mechanism by which the energy of excitation of a nucleus is removed. Such excited states accompany the decay of radioisotopes and result from induced nuclear transmutations. The gamma rays accompanying a particular type of nuclear reaction are composed of photons with either a single energy or a group of discrete energies. Typical energies of gamma rays range from a few keV to several MeV.

By measuring two properties of this gamma radiation fluence, it is possible to determine the type and quantity of radioactive waste present in a container. Photons comprising the gamma radiation fluence are detected and then, by conveying the detection signal to a device such as a multichannel spectrum analyzer, it is possible to determine both the energy of the detected photons and the quantity of the photons in each narrow segment of the energy spectrum.

Since each type of radioactive isotope has its specific and unique signature of decay. radiation, it is possible to analyze the output of a multichannel spectrum analyzer to determine the quantity and types of radioactive materials present in a waste container.

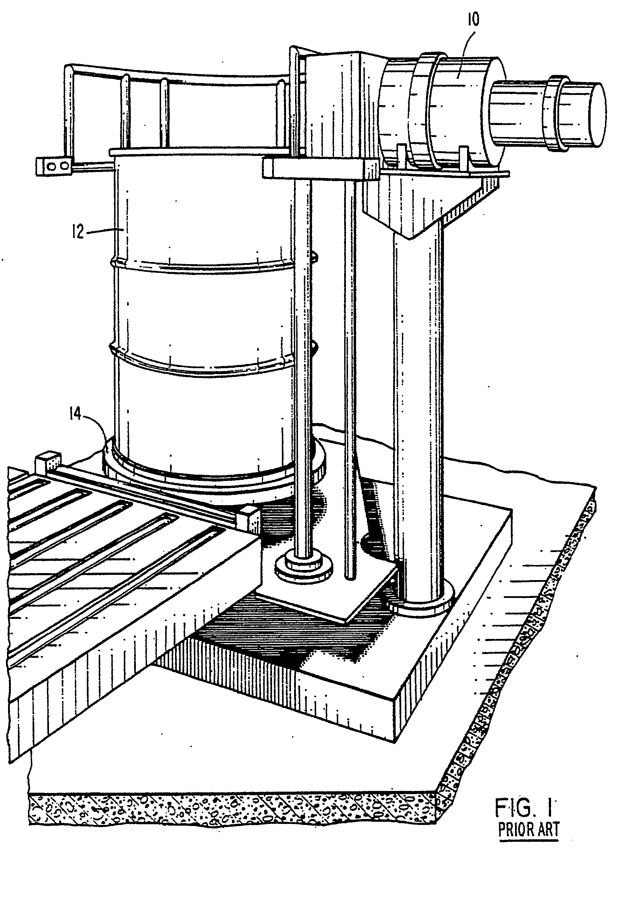

Current gamma radiation measurements at waste disposal facilities have been made by a device such as that shown in Figure 1, such as that made by Nuclear Data Inc. using a detector such as that made by Princeton Gamma-Tech., Inc. Here, a gamma detection device 10 measures the gamma radiation from a segment of drum 12. As shown in Figure 1, the measurement is being made of the topmost segment of the drum. To obtain a uniform 360-degree profile of this segment, the drum is rotated by table 14, accomplishing approximately 15 revolutions in 1.5 minutes.

This process is repeated for an additional 2 to 5 segments of the drum by elevating table 14, raising the drum and placing different segments in front of detector 10. This process generally takes approximately 12 minutes for a container measured in 6 segments.

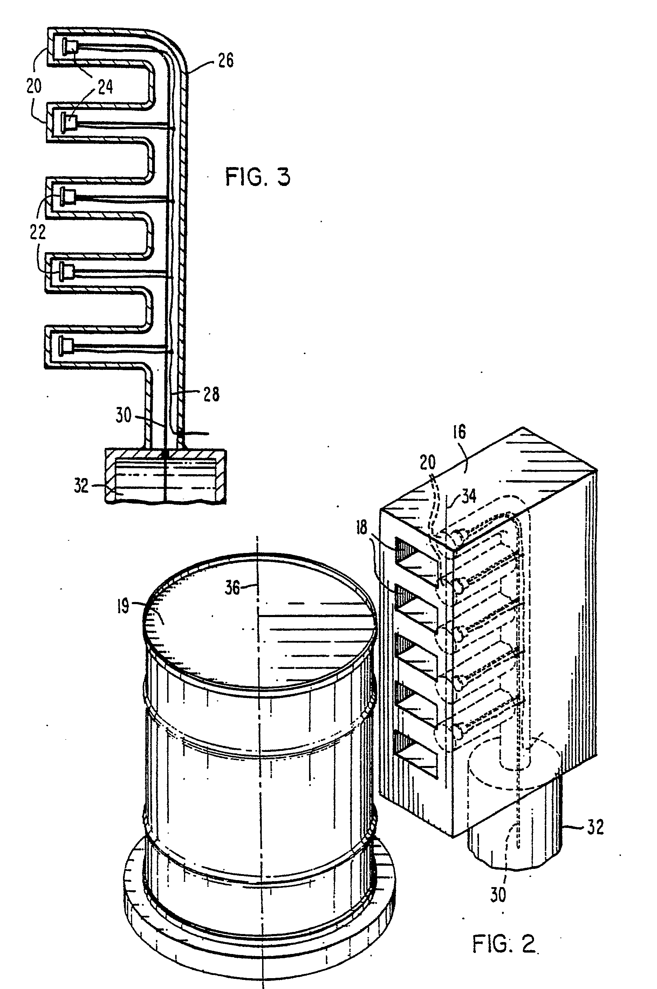

From IEEE NUCLEAR SCIENCE, volume NS-19, No.1, February 1972, pages 211–218, New York, US; L.V. EAST et al.: "Gamma-ray scanning-system for barrels containing plutonium waste" there is already known a device for measuring gamma radiation emitted from a container holding radioactive waste (page 211, paragraph 1), said device comprising radiation shielding means having a plurality of openings therein (page 212, column 1, lines 7–10), said openings each admitting gamma radiation from a portion of the container (Figure 1); a plurality of detection means each comprising a solid state gamma radiation detector (page 213, column 2, lines 11–13) and located within said shielding means proximate said respective shielding means openings (Figure 2); and signal transmission means for conveying the output signal of said detection means to a signal processor (Figure 1).

From IEEE NUCLEAR SCIENCE, volume NS-19, No. 1, February 1972, pages 820–827, IEEE, New York, US; K.L. SWINTH et al.: "A versatile gamma scanning system" it is known to use a detector with an associated liquid nitrogen dewar (page 821, paragraph 4).

Although the known devices allow the plurality of gamma radiation measurements necessary to get representative datas of the waste inside each container, the time needed for processing each container is 10 minutes or more (see page 211, column 1, lines 11–13 of the EAST-citation).

What is desired, especially in currently designed waste disposal facilities that attempt to achieve a high throughput of waste disposal containers, is a gamma radiation detection device that is faster than the known device without trading in resolution between different gamma photon energies or accuracy of obtained datas, respectively.

It is object of the invention to provide for such a gamma radiation detection device.

The object is solved by locating the detection means is an evacuated enclosure. This allows easy and equal cooling of the plurality of solid state gamma radiation detectors, if cooling is desired, and furthermore protects the detector against environmental influences.

This effect is increased if, according to a further embodiment of the invention, the individual preamplification circuits being provided in order to minimize noise and losses between detectors and to allow averaging of the output of the detectors are likewise located in the evacuated enclosure.

The evacuated enclosure isolates the detector thermally and thereby allows a further embodiment which is characterized in that the solid state gamma radiation detector is at a cryogenically cold temperature, preferably at a temperature at about minus 196°C or even below that temperature. This may be accomplished by keeping the detectors in contact with a thermally conductive rod made, for example,

of copper which is immersed in a cold material such as liquid nitrogen.

The device according to the invention may be used for methods for obtaining the total gamma radiation fluence from a container holding radioactive waste as indicated in sub-claims 7 to 9.

The device and the methods allow a rapid and relatively inexpensive measurement of the gamma fluence from a waste disposal container while keeping human exposure to a minimum.

In order that the invention can be more clearly understood, a convenient embodiment thereof will now be described, by way of example, with reference to the accompanying drawings in which:

Figure 1 is an isometric view of a prior art device used to measure gamma fluence from a waste container,

Figure 2 is an isometric view of a gamma radiation-measuring device showing a detector portion in phantom, and

Figure 3 is a plan sectional view of the device of Figure 2 with the shielding removed.

Referring to Figure 2, a device is shown for measuring gamma radiation that is emitted from a container holding radioactive waste. Shielding means 16, such as lead shielding, contains a plurality of openings 18 which admit gamma radiation from a portion of the container holding radioactive waste 19. A plurality of detection means 20 are located within the shielding means 16 proximate the respective openings 18.

Referring to Figure 3, the invention is shown in section without the lead shielding and in more detail. The plurality of detection means 20 is shown to comprise solid state gamma radiation detectors 22 such as germanium-lithium detectors, a preamplification circuit 24 electrically connected to said detector, and an evacuated enclosure 26 containing the plurality of solid state detectors and preamplification circuits.

Each solid state gamma radiation detector has an individual preamplification circuit in order to minimize noise and losses between detectors and to allow averaging of the output of the detectors. The preamplified detector output is conveyed to a signal processor, not shown, by transmitting means such as cable 28.

In order to further reduce detector noise and increase resolution between different gamma photon energies, detectors are kept cryogenically cold by contact with a thermally conductive rod 30 made, for example, of copper which is immersed in a cold material such as liquid nitrogen 32. Immersion in liquid nitrogen would maintain the copper rod at a temperature of about minus 196°C.

A total gamma radiation fluence from a container holding radioactive waste is obtained as follows:

A portion of the gamma radiation from a container such as a 55 gallon cylindrical container 19 is measured by making a plurality of simultaneous gamma radiation measurements, such as by detectors 20, of the radiation emitted from a portion of the container along a first path such as line segment 34 defined by the plurality of detectors 20 that is parallel to the axis 36 of the cylindrical container. The plurality of simultaneous gamma radiation measurements yields a like number of output signals which are combined to obtain a representative gamma fluence for the first path 34 along which the measurements were made.

Gamma radiation from the container is detected by further pluralities of simultaneous gamma radiation measurements which also yield output signals that are combined to obtain a representative gamma fluence for each respective plurality of simultaneous measurements. These further plurality of simultaneous gamma radiation measurements are taken along a second path which is substantially orthogonal to the first path. In the present example the detectors 20 scan around the circumference of said cylindrical container 19 by rotating the container about its axis 36.

Finally, these plurality of fluences representative of the plurality of simultaneous measurements are combined to obtain a total gamma radiation fluence for the entire container. This total gamma fluence contains both the energy of the photons and the quantity of photons at each energy and allows calculation of the type and quantity of radioactive material held by the container.

The time needed to obtain a total gamma fluence is about 1.5 minutes using this method of simultaneous measurements This information is used to confirm the accuracy of the shipping manifest, determine whether the material within the container is of the type appropriate for such burial, and further calculate the optimal packing arrangement of the waste disposal containers to reduce the overall radiation exposure to the environment.

## Claims

1. A device for measuring gamma radiation emitted from a container holding radioactive waste (19), whereby said device comprises radiation shielding means having a plurality of openings (18) therein, said openings (18) each admitting gamma radiation from a portion of the container; a plurality of detection means each comprising a solid state gamma radiation detector (22) and located within said shielding means (16) proximate said respective shielding means openings (18); and signal transmission means (28) for conveying the output signal of said detection means (20) to a signal processor, characterized in that the detection means (20) are located in an evacuated enclosure (26).

2. A device according to claim 1, whereby an individual preamplification circuit (24) is electrically connected to said each detector (22), characterized in that the preamplification circuits (24) are likewise located in the evacuated enclosure (26).

3. A device according to claims 1 or 2, characterized in that the solid state gamma radiation detector is at a cryogenically cold temperature, preferably at a temperature of about minus 196°C or below that temperature.

4. A device according to claim 3, characterized in that the detectors (22) are kept cold by contact with a thermally conductive rod (30) which is immersed in a cold material (32).

5. A device according to claim 4, characterized in that the rod is made from copper.

6. A device according to claim 4 or 5, characterized in that the cold material (32) is liquid nitrogen.

7. A method for obtaining the total gamma radiation fluence from a container holding radioactive waste, comprising detecting gamma radiation from the container by making a plurality of simultaneous gamma radiation measurements of the radiation emitted from a portion of the container along a first path yielding a like number of output signals; combining said output signals to obtain a representative gamma fluence for said first path along which said measurements were made; detecting gamma radiation from the container by further pluralities of simultaneous gamma radiation measurements yielding output signals which are combined to obtain a representative gamma fluence for each respective plurality of simultaneous measurements, said further plurality of simultaneous gamma radiation measurements taken along a second path substantially orthogonal to the first path; and combining said plurality of fluences representative of the plurality of simultaneous measurements to obtain a total gamma radiation fluence for the entire container, characterized by using a device according to one of the claims 1 to 6.

8. A method according to claim 7, whereby the container is a cylindrical container, one of the paths is a circle around the circumference of said cylindrical container, and the other path is a line segment parallel to the axis of the cylindrical container.

9. A method according to claim 8, whereby the plurality of simultaneous gamma radiation measurements is made along the first path, parallel to the axis of the cylindrical container, and the further pluralities of simultaneous gamma radiation measurements are made along the second path, around the circumference of said cylindrical container, by rotating said cylindrical container about its axis.

**Patentansprüche**

1. Vorrichtung zur Messung von einem radioaktiven Abfall enthaltenden Behälter (19) emittierter Gammastrahlung, wobei die Vorrichtung Strahlungsabschirmeinrichtungen, die in sich eine Vielzahl von Öffnungen (18) aufweisen, wobei die Öffnungen (18) jeweils Gammastrahlung von einem Teil des Behälters zulassen; eine Vielzahl von Detektoreinrichtungen, die jeweils einen Festkörpergammastrahlungsdetektor (22) umfassen und innerhalb der Abschirmeinrichtung (16) nahe der entsprechenden Öffnungen (18) in den Abschirmeinrichtungen angeordnet sind; und Signalübertragungseinrichtungen (28) zur Übertragung des Ausgangssignals der Detektoreinrichtungen (20) zu einem Signalprozessor umfassen, dadurch gekennzeichnet, daß die Detektoreinrichtungen (20) in einer evakuierten Umschließung (26) angeordnet sind.

2. Vorrichtung nach Anspruch 1, wobei ein individueller Vorverstärkerschaltkreis (24) mit jedem Detektor (22) elektrisch verbunden ist, dadurch gekennzeichnet, daß die Vorverstärkerschaltkreise (24) in gleicher Weise in der evakuierten Umschließung (26) angeordnet sind.

3. Vorrichtung nach Anspruch 1 oder 2, dadurch gekennzeichnet, daß der Festkörpergammastrahlungsdetektor sich an einer kryogenetisch kalten Temperatur, vorzugsweise an einer Temperatur von etwa −196°C oder unterhalb dieser Temperatur befindet.

4. Vorrichtung nach Anspruch 3, dadurch gekennzeichnet, daß die Detektoren (22) kalt gehalten werden durch Kontakt mit einem thermisch leitenden Stab (30), der in einem kalten Material (32) eingetaucht ist.

5. Vorrichtung nach Anspruch 4, dadurch gekennzeichnet, daß der Stab aus Kupfer hergestellt ist.

6. Einrichtung nach Anspruch 4 oder 5, dadurch gekennzeichnet, daß das kalte Material (32) flüssiger Stickstoff ist.

7. Verfahren zur Erlangung des gesamten Gammastrahlungsflusses aus einem radioaktiven Abfall enthaltenden Behälter, wobei das Verfahren folgendes umfaßt: Erfassen von Gammastrahlung aus dem Behälter, indem eine Vielzahl von simultanen Gammastrahlungsmessungen der von einem Teil des Behälters entlang einem ersten Weg gemacht werden, wobei eine gleiche Anzahl von Ausgangssignalen erhalten werden; Kombinieren der Ausgangssignale, um einen repräsentativen Gammafluß für den ersten Weg zu erhalten, entlang dem die Messungen gemacht wurden; Erfassen von Gammastrahlung aus dem Behälter durch weitere Vielzahlen von simultanen Gammastrahlungsmessungen, die Ausgangssignale liefern, die miteinander kombiniert werden, um einen repräsentativen Gammafluß für jede entsprechende Vielzahl von simultanen Messungen zu erhalten, wobei die weitere Vielzahl von simultanen Gammastrahlungsmessungen entlang einem zweiten Weg genommen wird, der im wesentlichen orthogonal zu dem ersten Weg liegt; und Kombinieren der Vielzahl von repräsentativen Flüssen der Vielzahl von simultanen Messungen, um einen gesamten Gammastrahlungsfluß für den gesamten Behälter zu erhalten; gekennzeichnet durch Verwendung einer Vorrichtung gemäß einem der Ansprüche 1 bis 6.

8. Verfahren nach Anspruch 7, wobei der Behälter ein zylindrischer Behälter ist, einer der Wege ein Kreis um den Umfang des zylindrischen Behälters und der andere Weg ein Liniensegment parallel zu der Achse des zylindrischen Behälters ist.

9. Verfahren nach Anspruch 8, wobei die Vielzahl von simultanen Gammastrahlungsmessungen entlang dem ersten Weg, parallel zur Achse des zylindrischen Behälters, und die weiteren Vielzahlen von simultanen Gammastrahlungsmessungen entlang dem zweiten Weg, um den Umfang des zylindrischen Behälters herum, gemacht werden, indem der zylindrische Behälter um seine Achse gedreht wird.

**Revendications**

1. Dispositif de mesure du rayonnement gamma émis par un conteneur rempli de déchets radioactifs (19), dans lequel le dispositif comprend des moyens d'écran de rayonnement percés d'un certain nombre d'ouvertures (18), ces ouvertures (18) laissant passer chacune le rayonnement gamma provenant d'une partie du conteneur; un certain nombre de moyens de détection comprenant chacun un détecteur de rayonnement gamma à l'état solide (22) placé à l'intérieur des moyens d'écran (16) au voisinage immédiat des ouvertures respectives (18) de ces moyens d'écran; et des moyens de transmission de signal (28) pour transmettre le signal de sortie des moyens de détection (20) à un processeur de signal, dispositif caractérisé en ce que les moyens de détection (20) sont placés dans une enceinte sous vide (26).

2. Dispositif selon la revendication 1, dans lequel un circuit de préamplification individuel (24) est relié électriquement à chaque détecteur (22), dispositif caractérisé en ce que les circuits de préamplification (24) sont placés de la même manière dans l'enceinte sous vide (26).

3. Dispositif selon l'une quelconque des revendications 1 et 2, caractérisé en ce que le détecteur de rayonnement gamma à l'état solide se trouve à une température de refroidissement cryogénique, de préférence à environ −196°C ou au-dessous de cette température.

4. Dispositif selon la revendication 3, caractérisé en ce que les détecteurs (22) sont maintenus froids par contact avec une barre thermiquement conductrice (30) immergée dans un matériau réfrigérant (32).

5. Dispositif selon la revendication 4, caractérisé en ce que la barre thermiquement conductrice est en cuivre.

6. Dispositif selon l'une quelconque des revendications 4 et 5, caractérisé en ce que le matériau réfrigérant (32) est de l'azote liquide.

7. Procédé pour obtenir la fluence de rayonnement gamma totale provenant d'un conteneur rempli de déchets radioactifs, ce procédé comprenant les différentes étapes consistant à détecter le rayonnement gamma provenant du conteneur en effectuant un certain nombre de mesures simultanées de rayonnement gamma sur le rayonnement émis par une partie du conteneur le long d'un premier chemin, de manière à obtenir un nombre correspondant de signaux de sortie; à combiner ces signaux de sortie de manière à obtenir une fluence gamma représentative pour le premier chemin le long duquel les mesures ont été effectuées; à détecter le rayonnement gamma provenant du conteneur par d'autres ensembles de mesures simultanées de rayonnement gamma donnant des signaux de sortie qui sont combinés de manière à obtenir une fluence gamma représentative pour chacun des ensembles respectifs de mesures simultanées, ces autres ensembles de mesures simultanées de rayonnement gamma étant effectués le long d'un second chemin essentiellement perpendiculaire au premier chemin; et à combiner les différentes fluences représentatives des différentes mesures simultanées de manière à obtenir une fluence de rayonnement gamma totale pour l'ensemble du conteneur; procédé caractérisé en ce qu'il utilise un dispositif selon l'une quelconque des revendications 1 à 6.

8. Procédé selon la revendication 7, caractérisé en ce que le conteneur est un conteneur cylindrique, en ce que l'un des chemins est un cercle entourant la circonférence du conteneur cylindrique, et en ce que l'autre chemin est un segment linéaire parallèle à l'axe du conteneur cylindrique.

9. Procédé selon la revendication 8, caractérisé en ce que le premier ensemble de mesures simultanées de rayonnement gamma est effectué le long du premier chemin, parallèle à l'axe du conteneur cylindrique, et en ce que les autres ensembles de mesures simultanées de rayonnement gamma sont effectués le long du second chemin, autour de la circonférence du conteneur cylindrique, en faisant tourner ce conteneur cylindrique autour de son axe.

FIG. I
PRIOR ART

FIG. 3

FIG. 2